(19) Europäisches Patentamt
European Patent Office
Office européen des brevets

(11) **EP 2 905 533 A1**

(12) **EUROPEAN PATENT APPLICATION**

(43) Date of publication:
**12.08.2015 Bulletin 2015/33**

(51) Int Cl.:
**F21V 9/16** *(2006.01)*   **F21V 14/08** *(2006.01)*

(21) Application number: **15154034.1**

(22) Date of filing: **05.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.02.2014   KR 20140013750**

(71) Applicant: **LG Innotek Co., Ltd.**
**Seoul 100-714 (KR)**

(72) Inventors:
• **Park, Kang Yeol**
**100-714 Seoul (KR)**
• **Kim, Ki Cheol**
**100-714 Seoul (KR)**
• **Son, Chang Gyun**
**100-714 Seoul (KR)**

(74) Representative: **Zardi, Marco**
**M. Zardi & Co. SA**
**Via Pioda 6**
**6900 Lugano (CH)**

(54) **Illuminating member and lighting device using the same**

(57)    Provided are an illuminating member capable of enabling the conversion of a color temperature and a light device using the illuminating member, the illuminating member including: a light emitting member outputting conversion beams having different color temperatures according to each thickness of regions through which an excited beam incident to a first opening passes; and a driving part for changing a thickness of the light emitting member through which the excited beam passes according to a color temperature to be controlled by changing a position or situation of the light emitting member.

【FIG. 1】

**Description**

## BACKGROUND OF THE INVENTION

Field of the Invention

Embodiments of the present invention relate to an illuminating member capable of enabling the conversion of a color temperature, and a lighting device using the illuminating member.

Description of the Related Arts

Interests to and demands for emotional lighting capable of enabling the control of a color temperature of lighting have been increasing. Lighting has been developed as a technology, which can be suitably applied according to the mental state and biorhythms of people, rather than being considered as a means for simply illuminating a dark space.

In general, it is known that the higher the color temperature, concentration increases, and the lower the color temperature, fatigability reduces. A color temperature of about 5000 K is the most suitable for a work activity, a color temperature of about 4000 K for a living room, and a color temperature of about 3000 K for a place to relax. In particular, in consideration sleeping efficiency or sleeping disorders, lighting having a color temperature of 3000 K or less is more suitable for sleeping compared to completely turning off lights.

According to circumstances, a suitable color temperature for lighting for a vehicle is needed. Under normal circumstances, white light similar to natural light is most suitable for the recognition of an object. On the contrary, in the event of rain or in a foggy day, a low color temperature for enabling the reduction of a scattering effect by small particles is suitable.

With regard to a conventional art for controlling a color temperature, in the case of an incandescent lamp, luminous intensity may be adjusted by a voltage or a color temperature may be changed using a dye. However, it is problematic in that a property of the color temperature is not basically good. In the case of a fluorescent lamp, a filter colored with a dye is used or the optical property of a phosphor is adjusted. This is problematic in that difficulty in the change of a color temperature is increased, and a difference in color temperatures of lighting is clearly visible to the naked eye.

In the case of LED (Light Emitting Diode) lighting which has been favoured, a color temperature is controlled by a combination of light sources having various wavelength ranges. In this structure, the LED elements having a specific wavelength express at least two color temperatures by controlling on/off operations. This is problematic in that color mixing is generated due to the use of LED elements having various wavelength ranges, and a difficult optical design for controlling luminous intensity distribution is needed.

## SUMMARY OF THE INVENTION

An aspect of embodiments of the present invention provides an illuminating member capable of effectively controlling a color temperature of lighting using the directional property and the light collection property of an incident beam and a phosphorescent and fluorescent material, and a lighting device using the illuminating member.

Another aspect of embodiments of the present invention provides an illuminating member having a simplified structure capable of reducing a production cost with regard to lighting for enabling the change of a color temperature, and a lighting device using the illuminating member.

According to an aspect of embodiments of the present invention, an illuminating member may include: a light emitting member intended for outputting conversion beams having different color temperatures according to each thickness of the light emitting member through which an excited beam incident to a first opening passes; and a driving part intended for changing a position or situation of the light emitting member so that a thickness of the light emitting member through which the excited beam passes can be changed according to a color temperature to be controlled.

According to another aspect of embodiments of the present invention, a lighting device may include: the aforesaid illuminating member; and a light emitting part irradiating an excited beam to the illuminating member.

## BRIEF DESCRIPTION OF THE DRAWINGS

The accompanying drawings are included to provide a further understanding of the present invention, and are incorporated in and constitute a part of this specification. The drawings illustrate exemplary embodiments of the present invention and, together with the description, serve to explain principles of the present invention. In the drawings:

   FIG. 1 is a cross-sectional view of an illuminating member according to an embodiment of the present invention;

FIG. 2 is a view illustrated for explaining an operational principle of the illuminating member of FIG. 1;

FIG. 3 is a cross-sectional view showing a light emitting member of an illuminating member according to another embodiment of the present invention;

FIG. 4 is a cross-sectional view showing a lighting emitting member of an illuminating member according to a further embodiment of the present invention;

FIG. 5 is a cross-sectional view showing a light emitting member of an illuminating member according to yet another embodiment of the present invention;

FIG. 6 is a cross-sectional view showing a light emitting member of an illuminating member according to still another embodiment of the present invention;

FIG. 7 is a schematic diagram showing a lighting device according to one embodiment of the present invention;

FIG. 8 is a cross-sectional view showing a lighting device according to another embodiment of the present invention; and

FIG. 9 is a view showing a color temperature change according to each thickness of an illuminating member of the lighting device according to the embodiment of the present invention.

## DETAILED DESCRIPTION OF THE INVENTION

Hereinafter, the embodiments of the present invention that an ordinary person skilled in the art can implement will be described with reference to the accompanying drawings. The embodiments in the specification and the constructions shown in the drawings are provided as a preferred embodiment of the present invention, and it should be understood that there may be various equivalents and modifications which could substitute at the time of filing. In addition, when it comes to the operation principle of the preferred embodiments of the present invention, when the known functions or functions are seemed to make unclear the subject matters of the present invention, they will be omitted from the descriptions of the invention. The terms below are defined in consideration of the functions of the present invention, and the meaning of each term should be interpreted by judging the whole parts of the present specification, and the elements having the similar functions and operations of the drawings are given the same reference numerals. As used herein, the singular forms are intended to include the plural forms as well, unless the context clearly indicates otherwise.

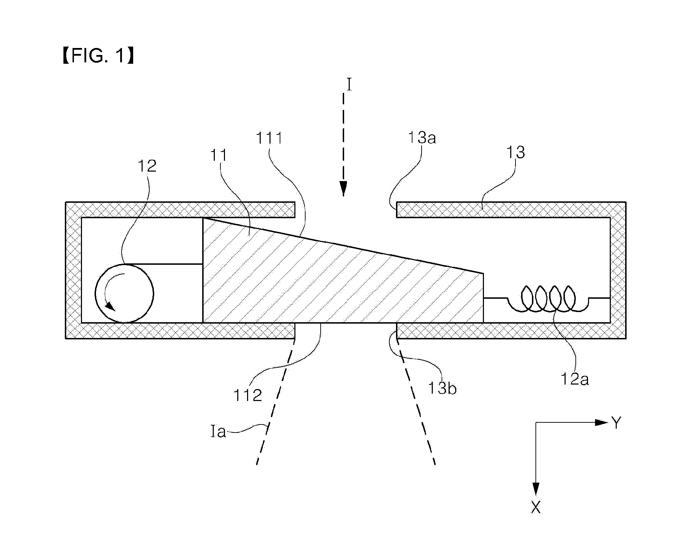

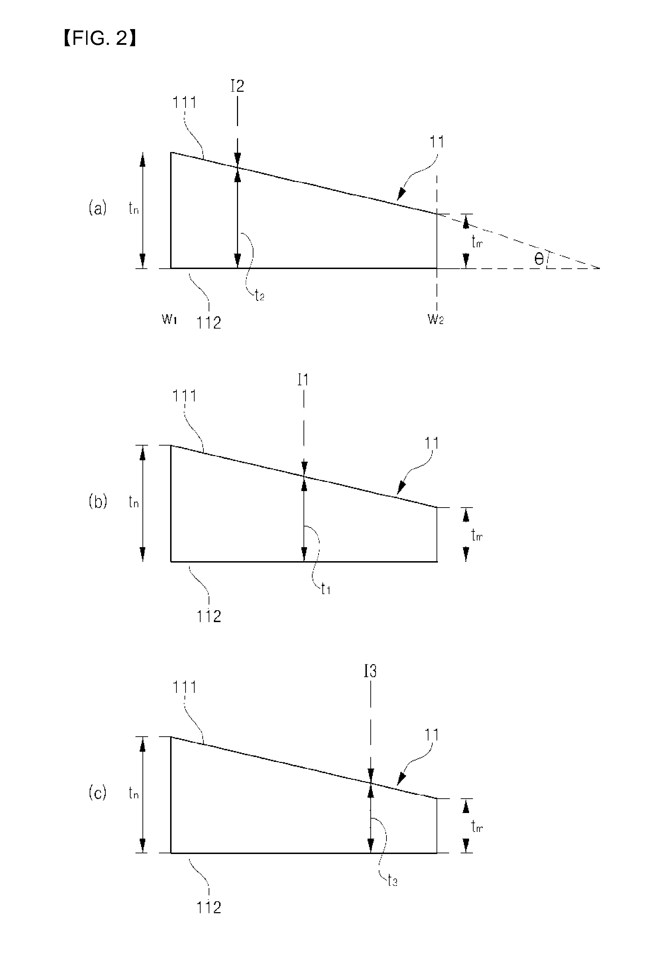

FIG. 1 is a cross-sectional view of an illuminating member according to an embodiment of the present invention, and FIG. 2 is a cross-sectional concept view illustrated for explaining an operational principle of the illuminating member of FIG. 1.

Referring to FIGS. 1 and 2, an illuminating member according to one embodiment of the present invention may have regions having different thicknesses and may include: a light emitting member 11 containing a fluorescent material and outputting conversion beams having different color temperatures according to regions of the light emitting member through which an excited beam passes; and a driving part for changing a thickness of the light emitting member through which the excited beam passes by changing a position or situation of the light emitting member.

In particular, the light emitting member 11 may output conversion beams having different color temperatures according to each thickness of regions through which the excited beam passes. To do so, the illuminating member 11 according to the present embodiment of the invention may be implemented to have regions with different thicknesses through which the beam passes with respect to a total area.

As one example, as illustrated in FIG. 2, the illuminating member 11 according to the present embodiment of the invention may be implemented such that a thickness is gradually reduced from one end W1 to another end W2. Specifically, like the structure of (A) of FIG. 2, the illuminating member 11 may have a first surface 111 and a second surface 112 corresponding to an opposite surface facing the first surface. The first surface 111 may be implemented to make an inclination angle θ with the second surface 112.

The inclination angle θ may be implemented as an acute angle. That is, the light emitting member may have the flat second surface 112, and the first surface 111 facing the second surface may be implemented to have a line type structure with a gradual slope at a fixed rate.

With regard to a change in a thickness of the illuminating member 11, when an excited beam incident to the illuminating member passes through the illuminating member containing a fluorescent material, the thickness of the illuminating member through which the excited beam passes is changed according to each position where an incidence surface and the excited beam meet, thereby enabling the excited beam to be output as conversion beams having different color temperatures.

Various modified examples in which a thickness of the light emitting member 11 is changed may be implemented.

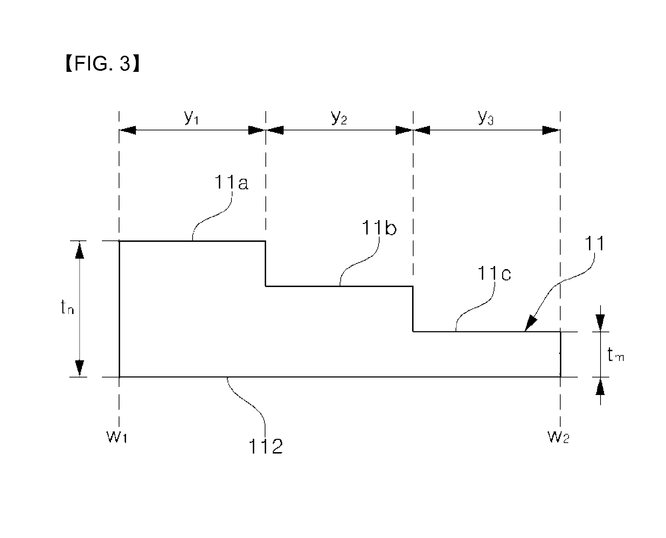

For example, as illustrated in FIG. 2, the illuminating member man be implemented in such a manner that the first surface has a gradual slope at a fixed rate. Also, as illustrated in FIG. 3, the light emitting member man be implemented to have a thickness change in a stepped form in which regions y1, y2, y3 having the same thickness are provided, and at least two step heights in each region are provided.

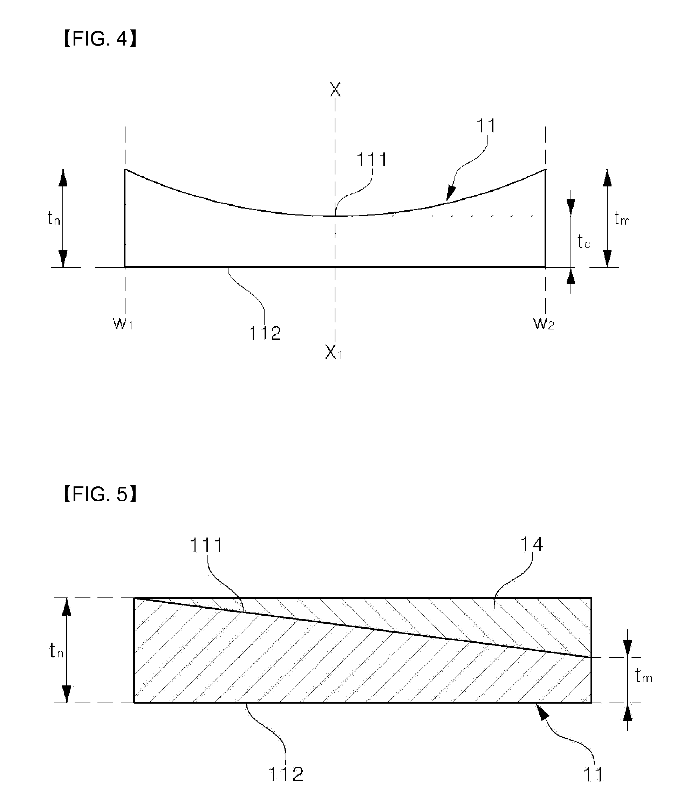

Also, as illustrated in FIG. 4, the illuminating member may be implemented in a structure in which the second surface has a curvature. That is, as illustrated in FIG. 4, the illuminating member may be implemented so that the second surface can have a curvature at a fixed rate. Also, as illustrated in FIG. 4, the illuminating member may be implemented in a structure in which a central portion X~X1 is formed to have the smallest thickness, and the thickness of the illuminating member is gradually increased from the central portion to the outside.

Of course, the illuminating member according to the present embodiment of the invention is not limited to the shapes above. All structure in which regions having different thicknesses are implemented may be variously changed so as to be included in the gist of the present embodiment of the invention.

The main constitutive elements of an illuminating member and a lighting device according to some embodiments of the present invention will be hereinafter described in detail with reference to FIGS. 1 to 9.

Referring to FIG. 1, the illuminating member according to the present embodiment includes the light emitting member 11 and a driving part 12. Also, the illuminating member may further include a housing 13.

The light emitting member 11 has the first surface 111 and the second surface 112 opposite to the first surface and is provided so that the second surface 112 can have a slope based on the first surface 111. The first surface 111 corresponds to an incidence surface, and the second surface 112 corresponds to an emission surface.

The first surface 111 may be implemented as the incidence surface extending from one end to another end of the light emitting member in a thickness direction (x-direction) of the light emitting member 11 and inclined with respect to the second surface 112, but the present invention is not limited to such a configuration. The second surface 112 may be implemented as a flat surface.

The light emitting member 11 is produced to contain a fluorescent material, a phosphorescent material, or a fluorescent and phosphorescent substance resulting from mixing them. The light emitting member 11 may be a fluorescent material, a phosphorescent material, or a mixture thereof itself. Also, the light emitting member 11 may result from dispersively disposing a fluorescence material, a phosphorescence material, or a fluorescent and phosphorescent substance resulting from mixing them in the inside of a base substrate or on a surface of the base substrate.

Also, the light emitting member 11 may be produced by mixing and firing a base substrate having a scattering property and a fluorescent material and a phosphorescent material. Glass or resin containing scattering particles or scattering patterns may be used in the base substrate.

The second surface of the illuminating member has a structure in a flat plate form to come into contact with a bottom surface of the housing. The first surface of the illuminating member is configured such that a beam passing through the incidence part is disposed in a light incidence region. That is, when the excited beam is incident via the light incidence part of the light emitting member 11, a length (thickness) of the light emitting member 11 through which the excited beam passes is changed according to each position of the incidence surface that meets the excited beam. Thus, according to each thickness of the light emitting member through which the excited beam passes, conversion beams Ia having different color temperature is outputted via an output part.

The driving part 12 adjusts a position or situation of the light emitting member 11 so that a position of the first surface 111 of the light emitting member 11 in contact with the excited beam I can be changed according to each color temperature of the conversion beams Ia intended to be obtained by controlling the position or situation of the light emitting member 11.

The driving part 12 may be implemented using an actuator having various existing forms capable of moving a position of the light emitting member 11 or changing a situation of the light emitting member. As one example, the driving part 12 may include a motor connected to one end of the light emitting member 11 and disposed to pull and push the light emitting member 11. In such a case, the driving part 12 may include an elastic member 12a (spring or the like) connected to another end of the light emitting member 11. The other end of the light emitting member 11 corresponds to a portion opposite to the one end of the light emitting member 11.

Also, the illuminating member may further include the housing 13 in which the illuminating member is accommodated, and which has a light incidence part and a light emission part.

The housing 13 supports the light emitting member 11, the driving part 12 or both of them. The housing 13 has a first opening 13a facing the first surface 111 of the light emitting member 11. Also, the housing 13 has a second opening 13b disposed to face the first opening 13a, the light emitting member 11 being interposed between the first opening and the second opening. The housing 13 may cover the first surface 111 and the second surface 112 except for a portion exposed to the outside by the first opening 13a and the second opening 13b.

Formation of the housing 13 may be omitted according to a place where the light emitting member 11 and the driving part 12 are installed, or a form or structure of a lighting device using the illuminating member. That is, the housing 13 may be omitted or may be selectively used according to the structure or form of the lighting device using the illuminating member with regard to various aspects of the illuminating member of the present embodiment.

In the present embodiment, the illuminating member may be provided as a lighting module including the light emitting member 11 and the driving part 12.

According to the present embodiment, the light emitting member is prepared by firing a phosphorescent and fluorescent material having a uniform composition property using a single process and by forming a step difference for enabling a change in thickness of a part of the light emitting member to which the incident beam travels via a post process. Then, a position of the incidence surface at which the incident beam and the light emitting member meet is minutely adjusted for providing a change in thickness of the part of the light emitting member to which the incident beam travels. Thus, in the lighting device, the color temperature can be conveniently and efficiently controlled.

FIG. 2 is a view illustrated for explaining an operational principle of the illuminating member of FIG. 1.

As shown in (A) of FIG. 2, the illuminating member according to the present embodiment is configured such that an incident beam Il incident to a first position on the first surface 111 (hereinafter referred to as 'the incidence surface') corresponding to an inclined surface of the light emitting member 11 is output as a conversion beam having a first color temperature from the flat second surface 112 (hereinafter referred to as 'the emission surface') by passing through a portion of the light emitting member 11 having a first thickness t1 at the first position.

As shown in (B) of FIG. 2, the illuminating member according to the present embodiment is configured such that an incident beam I2 incident to a second position on the incidence surface 111 of the light emitting member 11 is output as a conversion beam having a second color temperature from the emission surface 112 by passing through a portion of the light emitting member 11 having a second thickness t2 at the second position. The second thickness t2 is thicker than the first thickness t1, and the second color temperature is different from the first color temperature.

Furthermore, as shown in (C) of FIG. 2, the illuminating member according to the present embodiment is configured such that an incident beam I3 incident to a third position on the incidence surface 111 of the light emitting member 11 is output as a conversion beam having a third color temperature from the emission surface 112 by passing through a portion of the light emitting member 11 having a third thickness t3 at the third position. The third thickness t3 is thinner than the first thickness t1, and the third color temperature is different from the first color temperature and the second color temperature.

In the present embodiment, a thickness tn of one end of the light emitting member 11 is thicker than a thickness tm of another end opposite to the one end.

A thickness L of the light emitting member 11 may be controlled to satisfy the conditions of Equations 1 to 4.

【Equation 1】

$$L_{MIN} = L \text{ such that for } f(L, K, P, F) = CCT, f(L_{MIN}, K, P, D, F) = 15000K$$

【Equation 2】

$$L_{MAX} = L \text{ such that for } f(L, K, P, F) = CCT, f(L_{MAX}, K, P, D, F) = 3000K$$

【Equation 3】

$$0.1W < F < 100W$$

【Equation 4】

$$L_{MIN} \leq L \leq L_{MAX}$$

In Equation 1 to Equation 4, L represents a distance between two points at which the incident surface and the emission surface of the light emitting member and the excited beam intersect, K represent s the kind of a luminous substance of the light emitting member, P represents the ratio of the luminous substance, D represents a grain size of the luminous substance of the light emitting member, F represents the luminous flux of an excited beam, $L_{MIN}$ represents L when a CCT (Correlated Color Temperature) value is 15000K, and $L_{MAX}$ represents L when a CCT (Correlated Color Temperature) value is 3000K.

According to the aforesaid embodiment, the color temperature of a beam emitted from a laser according to a specific part of a single phosphorescent and fluorescent material collecting the laser excited beam is changed using a laser property, namely, a directional property of the beam emitted from the laser and an advantageous property for concentrating the beam on one small point, and an arrangement property of the phosphorescent and fluorescent (Lumiphor) material and the laser light source disposed to be separated from each other by a predetermined distance, thereby implementing the lighting device capable of enabling a change of the color temperature.

As one example, a white beam is created by mixing a blue excited beam outputted from a laser and a yellow beam converted from a phosphorescent and fluorescent material. At this time, as a thickness of the phosphorescent and fluorescent material to which the laser excited beam travels increases gradually, an amount of the transmitted blue excited beam reduces, an amount of the yellow conversion beam increases, and a color temperature reduces. On the contrary, when a thickness of the phosphorescent and fluorescent material reduces, the color temperature increases.

A luminescent material known as lumiphors or luminophoric may be used as the material of the light emitting member. An example of the luminescent material may include a material that enables a down conversion for converting light particles into a lower energy level, or may include a material that enables an up conversion for converting light particles into a higher energy level.

Meanwhile, in the aforesaid present embodiment, the driving part is connected to the light emitting member to change a position or situation of the light emitting member with respect to the incident beam, but the present invention is not limited to such a configuration. For example, the driving part may be independently disposed with the light emitting member so as to change a position or situation of the light source irradiating the incident beam. In such a case, like the aforesaid present embodiment, a relative position of the light emitting member, which meets the incident beam, is changed, so that the same operational effect can be obtained.

Also, like movement of the light source, the driving part may be independently disposed with the light emitting member and the light source so as to limit an optical path of the incident beam or guide the incident beam so that the optical path of the incident beam, which meets the incidence surface of the light emitting member, can be changed. In such a case, like the aforesaid present embodiment, a relative position of the light emitting member, which meets the incident beam, is changed, so that the same operational effect can be obtained. However, it is preferable to use the present embodiment compared to the other modified examples in terms of simplification of the device and operating convenience.

FIG. 3 is a cross-sectional view showing a light emitting member of an illuminating member according to another embodiment of the present invention.

Referring to FIG. 3, in the illuminating member according to the present embodiment, the light emitting member 11 has the incidence surface having a stepped structure with a step difference. The incidence surface of the light emitting member 11 may be composed of a flat first incidence surface 111a having a first thickness tn, a flat second incidence surface 111b having a second thickness thinner than the first thickness tn, and a flat third incidence surface 111c having a third thickness tm thinner than the second thickness. Here, the flat incidence surfaces refer to surfaces parallel to the emission surface 112 of the light emitting member 11 without being limited thereto. The flat incidence surfaces may be implemented to be inclined with respect to the emission surface 112 while having the first thickness, the second thickness and the third thickness.

The thickness of one end of the light emitting member 11 may be the first thickness tn, and the thickness of another end opposite to the one end may be the third thickness tm.

FIG. 4 is a cross-sectional view showing a lighting emitting member of an illuminating member according to a further embodiment of the present invention.

Referring to FIG. 4, in the illuminating member according to the present embodiment, the light emitting member 11 has the incidence surface 111 having a symmetrical stepped structure. The fact that the incidence surface 111 has the symmetrical stepped structure means that the incidence surface 111 has a form as the concave surface of a concave lens. In this case, the incidence surface 111 may have a left and right symmetrical form with respect to segments extending in the thickness direction of a central portion.

Of course, if the incidence surface may have a thickness difference beyond a fixed size according to a position where the incidence surface meets the incident beam when the incidence surface 111 has a concave surface-like shape, the incidence surface 111 may have a right and left asymmetrical form based on a center line.

In the present embodiment, the second thickness tc of the central portion of the incidence surface 111 is thinner than the first thickness tn of one side of the incidence surface 111 and the third thickness tm of another side of the incidence surface 111. The other side is located to be opposite to the one side of the incidence surface 111 of the light emitting member 11.

Meanwhile, the aforesaid present embodiment, the case in which the incidence surface 111 has a concave surface form has been exemplified, but the present invention is not limited to such a configuration. The incidence surface 111 may be implemented to have a convex surface form. In this case, like the incidence surface having the concave surface form, the incidence surface having the convex surface form may also have a fixed thickness difference according to each position which meets the incident beam.

Also, in the aforesaid embodiment, the incidence surface having a concave or convex curved surface form has been exemplified, but the present invention is not limited to such a configuration. The incidence surface may be implemented in a V-like form having a structure in which the incidence surface in an inclined form of FIG. 2 is disposed to be symmetrical, or may be implemented in a V-like step form in which the incidence surface in a step form of FIG. 3 is disposed to be symmetrical.

FIG. 5 is a cross-sectional view showing a light emitting member of an illuminating member according to yet another embodiment of the present invention.

Referring to FIG. 5, in the illuminating member according to the present embodiment, the light emitting member 11 is disposed on a diffusion part 14 containing a scattering material. The light emitting member 11 may be provided by coating a luminous substance on the diffusion part 14 or by bonding the luminous substance to the diffusion part.

The diffusion part 14 diffuses the incident beam and transmits it to the light emitting member 11. The scattering material used in the diffusion part 14 may be a metallic material without being limited thereto. The scattering material may be replaced with beads, foams, through holes, or the like.

When the diffusion part 14 is used, the incident beam incident to the light emitting member 11 is diffused so that the incident beam can be converted in a wider region of the light emitting member 11, thereby enabling the generation of a conversion beam having a desired color temperature and the improvement of light efficiency.

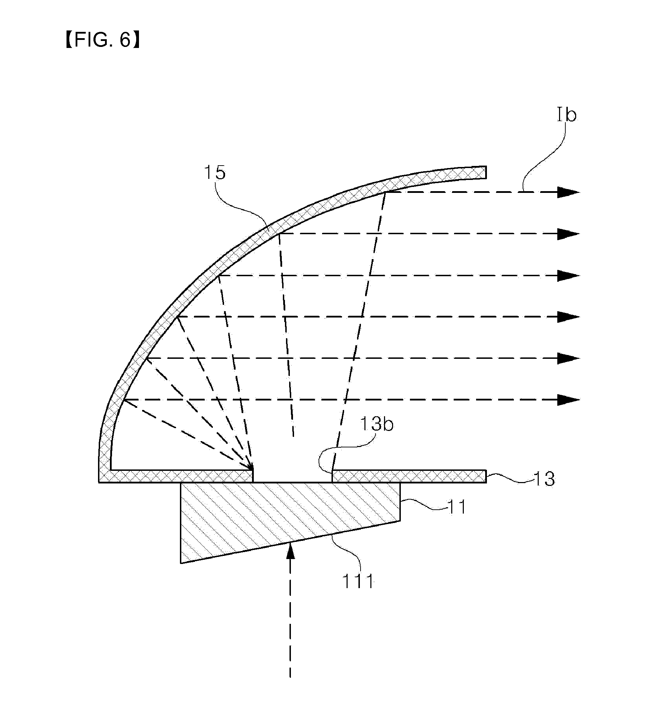

FIG. 6 is a cross-sectional view showing a light emitting member of an illuminating member according to still another embodiment of the present invention.

Referring to FIG. 6, the illuminating member according to the present embodiment further includes a reflective part 15. The reflective part 15 may be detachably attached to the housing 13 or may be integrally formed with the housing 13.

The reflective part 15 functions so that the optical path of a conversion beam (see reference numeral Ia of FIG. 1), which hits an inner surface of the reflective part 15 via the second opening 13b of the housing 13 by being converted from the light emitting member 11, can be changed at a right angle appropriately. The reflective part 15 performs a function similar to that of a reflective surface or reflector of a lamp for a vehicle

The reflective part 15 may be provided in a similar form to an external surface of four equal parts formed using surfaces going through the center of a structure having a spherical shape with a vacant space in the inside thereof

At this time, the second opening 13b of the housing 13 is disposed so that a conversion beam can be irradiated to an internal wall of an inner space of the reflective part 15.

The reflective part 15 is provided on a surface of the internal wall of the inner space or in the inside of the inner space so that a reflective material such as Ag, Al, stainless steel or the like can be dispersed.

According to the present embodiment, lighting having various color temperatures may be provided by controlling color temperatures in a single lamp module using the aforesaid illuminating member. Furthermore, it is advantageous in that a production cost can be reduced, a structure can be simplified, a degree of mechanical freedom can be increased, and the repair of disorders can be easily performed.

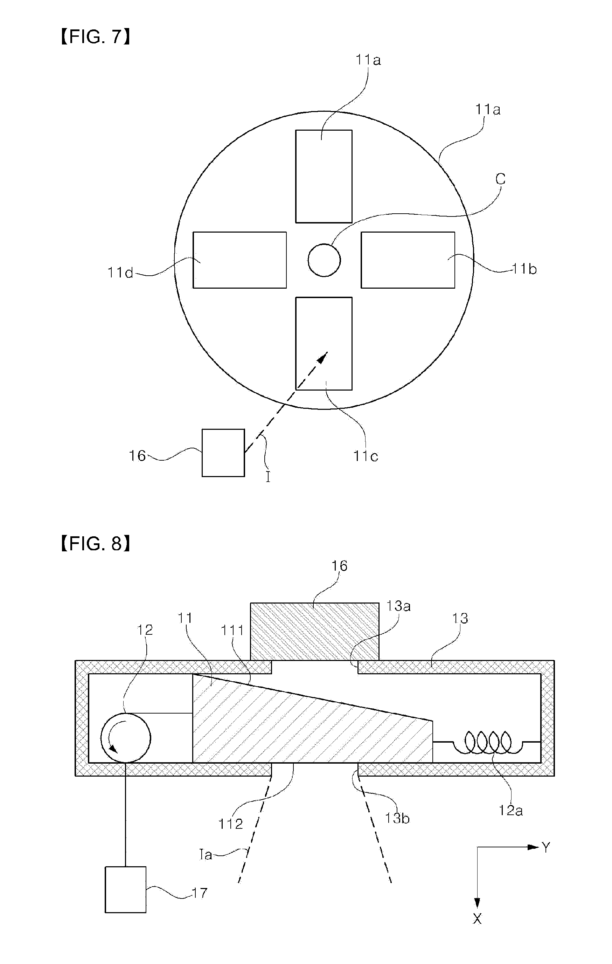

FIG. 7 is a schematic diagram showing a lighting device according to one embodiment of the present invention.

Referring to FIG. 7, the lighting device according to the present embodiment includes a light emitting member 11a, a driving part (see reference numeral 12 of FIG. 1) and a light source part 16.

The light emitting member 11a includes: a first light emitting part 11a having a first thickness on a base substrate in a disc or circular disk form; a second light emitting part 11b having a second thickness thicker than the fist thickness; a third light emitting part 11c having a third thickness thicker than the second thickness; and a fourth light emitting part 11d having a fourth thickness thicker than the third thickness.

The base substrate may be a diffusion part (see reference numeral 15 of FIG. 5) or a transparent or opaque member. The first to fourth light emitting parts may be disposed on one surface of the base substrate or may be disposed to pass through the base substrate.

When the driving part connected to the base substrate rotates the base substrate, the incident beam I basically arranged to be emitted from the light source part 16 and to be irradiated to the third light emitting part 11c may be irradiated to a different light emitting part 11a, 11b or 11d having a position changed according to the rotation of the base substrate. In this case, the incident beam I is irradiated to a specific light emitting part determined according to a rotation angle of the base substrate, and conversion beams converted by a luminous substance contained in the light emitting member 11 have color temperatures determined according to each thickness of the light emitting part.

The light source part 16 may be a laser beam generating device that generates a laser beam having a specific color and outputs the laser beam. The light source part 16 may be provided using a blue LED (Light Emitting Diode) element that emits a blue laser beam.

FIG. 8 is a cross-sectional view showing a lighting device according to another embodiment of the present invention.

Referring to FIG. 8, a lighting device according to the present embodiment includes: a light emitting member 11; a driving part 12; a housing 13; a light source part 16; and a sensor part 17.

The light emitting member 11, the driving part 12, the housing 13 and the light source part 16 are substantially identical to the corresponding constitutive elements of the illuminating member or the lighting device previously explained with reference to FIGS. 1 and 7.

The sensor part 17 is connected to the driving part 12. The sensor part 17 may be a luminance sensor or a roughness sensor and may have a communication part for enabling wire communication or wireless communication with the driving part 12. In the case of the wire communication, the communication part may be replaced with a wiring.

In the case of the wireless communication, the communication part may be implemented as a fixed wireless communication module. In such a case, the driving part 12 may also have a fixed wireless communication module. The wireless communication module is already known in the communication technology fields.

According to the present embodiment, the driving part 12 may enable a change in a position or situation of the light emitting member 11 according to a transmission signal or an output signal of the sensor part 17. At this time, a thickness of the light emitting member 11 at an incidence position of the incident beam passing through the light emitting member 11 is changed according to a signal of the sensor part 17, so that a color temperature of the conversion beam can be controlled.

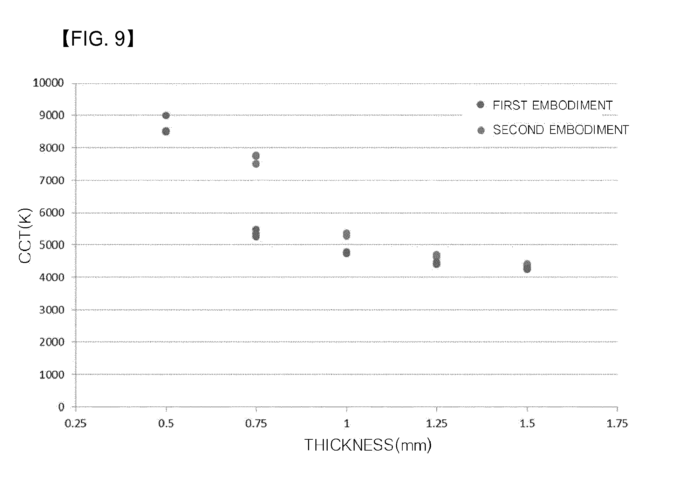

FIG. 9 is a view showing a color temperature change according to each thickness of an illuminating member of the lighting device according to the embodiment of the present invention.

Referring to FIG. 9, the light emitting member as shown in FIG. 2 was prepared using a phosphor sample of 2% with a luminescent material, and a blue laser beam was irradiated to the prepared light emitting member of the first embodiment, so a change in color temperatures resulting from each thickness of the light emitting member was measured.

Furthermore, the light emitting member as shown in FIG. 2 was prepared using a phosphor sample of 4% with a luminescent material, and a blue laser beam was irradiated to the prepared light emitting member of the second embodiment, so a change in a color temperature resulting from each thickness of the light emitting member was measured.

As a result of measurement, with regard to the lighting device including the light emitting member of the first embodiment, when each thickness of the light emitting member through which the excited beam passes was controlled as 0.5 mm, 0.75 mm, 0.1 mm, 1.25 mm, and 1.5 mm, each color temperature of the conversion beam was changed to about 9000 K, about 5500 K, about 4800 K, about 4400 K, and about 4200 K.

Furthermore, with regard to the lighting device including the light emitting member of the second embodiment, when each thickness of the light emitting member through which the excited beam passes was controlled as 0.5 mm, 0.75 mm, 0.1 mm, 1.25 mm, and 1.5 mm, each color temperature of the conversion beam was changed to about 9000 K, about 8800 K, about 5300 K, about 4800 K, and about 4300 K.

According to the present embodiment, when a step difference in the thickness of the light emitting member is formed, and the incident beam having a straight property is irradiated to the incidence surface of the light emitting member, the color temperature of the conversion beam may be effectively controlled by controlling an incidence position or a transmission thickness of the light emitting member with respect to the incident beam.

The illuminating member and the lighting device using the illuminating member according to the aforesaid embodiments can be applied to various lamp devices for which lighting is needed, such as a lamp for a vehicle, a home lighting device, and an industrial lighting device. For example, in the case of a lamp for a vehicle, when the illuminating member and the lighting device are applied to a headlight, indoor lighting for the vehicle, a rear light and the like.

As set forth above, according to some embodiment of the present invention, with regard to the illuminating member and the lighting device using the illuminating member, a single light source part having a directional property and a light collection property and a single phosphorescent and fluorescent material are used so that a color temperature of lighting can be effectively controlled.

Also, according to some embodiment of the present invention, the illuminating member capable of enabling a change in a color temperature, and the lighting device using the illuminating member can have a simplified structure capable of reducing a production cost. In particular, the lighting device can be configured with a small number of components, and a degree of mechanical freedom can be improved thanks to the simple structure. Furthermore, thanks to the small number of the components, it is advantageous in that the repair of disorder can be easily performed.

As previously described, in the detailed description of the invention, having described the detailed exemplary embodiments of the invention, it should be apparent that modifications and variations can be made by persons skilled without deviating from the spirit or scope of the invention. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims and their equivalents.

**Claims**

1. An illuminating member, comprising:

a light emitting member having regions with different thicknesses and outputting conversion beams having different color temperatures according to each region through which an excited beam passes, the light emitting member containing a fluorescent material; and
a driving part for changing a thickness of the light emitting member through which the excited beam passes by changing a position or situation of the light emitting member.

2. The illuminating member of claim 1, wherein the illuminating member is configured such that a thickness of one end and a thickness of another end opposite to the one end are gradually reduced.

3. The illuminating member of claim 1 or 2, wherein the illuminating member has a first surface and a second surface corresponding to an opposite surface facing the first surface, wherein the first surface makes an inclination angle with the second surface.

4. The illuminating member of claim 1, wherein the illuminating member has at least two step differences on the first surface thereof.

5. The illuminating member of claim 4, wherein the illuminating member is configured such that unit regions for implementing each step difference have the same thickness.

6. The illuminating member of claim 1, wherein the illuminating member has a first surface and a second surface corresponding to an opposite surface facing the first surface, wherein the second surface have a curvature.

7. The illuminating member of claim 6, wherein a thickness of the illuminating member is gradually increased based on a center portion (X) of the illuminating member.

8. The illuminating member of any one of claims 1 to 7, further a diffusion member disposed on the first surface of the illuminating member.

9. The illuminating member of claim 8, wherein the diffusion member is disposed to be closely attached to the first surface.

10. The illuminating member of any of claims 1 to 9, further comprising a housing in which the illuminating member is accommodated, and which has a light incidence part and a light emission part.

11. The illuminating member of claim 10, wherein a first opening having the light incidence part and a second opening having the light emission part are disposed at each position corresponding to each other.

12. The illuminating member of claim 1, wherein the light emitting member includes a plurality of light emitting member units having different thicknesses and radially disposed in a fixed center, and the driving part rotates the light emitting member according to the color temperature to enable a change in the thickness of the light emitting member through which the excited beam passes.

13. The illuminating member of any one of claims 1 to 12, wherein the thickness satisfies conditions of the following Equations 1 to 4:

[Equation 1]

$$L_{MIN} = L \text{ such that for } f(L, K, P, F) = CCT, f(L_{MIN}, K, P, D, F) = 15000K$$

[Equation 2]

$$L_{MAX} = L \text{ such that for } f(L, K, P, F) = CCT, f(L_{MAX}, K, P, D, F) = 3000K$$

[Equation 3]

$$0.1W < F < 100W$$

[Equation 4]

$$L_{MIN} \leq L \leq L_{MAX}$$

wherein L represents a distance between two points at which the incident surface and the emission surface of the light emitting member and the excited beam intersect, K represents the kind of a luminous substance of the light emitting member, P represents the ratio of the luminous substance, D represents a grain size of the luminous substance of the light emitting member, F represents the luminous flux of an excited beam, $L_{MIN}$ represents L when a CCT (Correlated Color Temperature) value is 15000K, and $L_{MAX}$ represents L when a CCT (Correlated Color Temperature) value is 3000K.

14. The illuminating member of any of claims 1 to 13, further comprising a sensor part connected to the driving part, wherein the driving part controls the thickness of the light emitting member through which the excited beam passes according to an output signal of the sensor part.

15. A lighting device, comprising:

an illuminating member of any one of claims 1 to 14; and
a light emitting part irradiating an excited beam to the illuminating member.

【FIG. 1】

【FIG. 2】

【FIG. 3】

【FIG. 4】

【FIG. 5】

【FIG. 6】

【FIG. 7】

【FIG. 8】

【FIG. 9】

Europäisches
Patentamt

European
Patent Office

Office européen
des brevets

**EUROPEAN SEARCH REPORT**

Application Number

EP 15 15 4034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/236534 A1 (PARKER JEFFERY R [US] ET AL) 20 September 2012 (2012-09-20) | 1-3,6,7, 10,11, 14,15 | INV. F21V9/16 F21V14/08 |
| Y | * figure 12 * <br> * paragraph [0034] * <br> * paragraph [0069] - paragraph [0070] * | 4,5,8,9, 12 | |
| X | US 2009/086475 A1 (CARUSO JAMES [US] ET AL) 2 April 2009 (2009-04-02) <br> * figures 1,3,10 * <br> * paragraph [0035] - paragraph [0040] * | 1-3,15 | |
| X | WO 2013/030727 A1 (KONINKL PHILIPS ELECTRONICS NV [NL]; PEETERS MARTINUS PETRUS JOSEPH [N) <br> 7 March 2013 (2013-03-07) <br> * figures 2a,2b * <br> * page 9, paragraph 3 - page 10, paragraph 3 * | 1-3,15 | |
| Y | US 2013/083510 A1 (PARK JONG CHAN [KR] ET AL) 4 April 2013 (2013-04-04) <br> * figures 5,6 * <br> * paragraph [0103] - paragraph [0114] * | 4,5,12 | TECHNICAL FIELDS SEARCHED (IPC) <br><br> F21V |
| Y | WO 2010/088658 A1 (RINGDALE INC [US]) 5 August 2010 (2010-08-05) <br> * the whole document * | 8,9 | |

The present search report has been drawn up for all claims

| Place of search | Date of completion of the search | Examiner |
|---|---|---|
| The Hague | 29 June 2015 | Prévot, Eric |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 15 15 4034

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2015

| Patent document cited in search report | | Publication date | Patent family member(s) | | Publication date |
|---|---|---|---|---|---|
| US 2012236534 | A1 | 20-09-2012 | TW | 201248083 A | 01-12-2012 |
| | | | US | 2012236534 A1 | 20-09-2012 |
| | | | US | 2012236535 A1 | 20-09-2012 |
| | | | WO | 2012125806 A2 | 20-09-2012 |
| US 2009086475 | A1 | 02-04-2009 | CN | 101842907 A | 22-09-2010 |
| | | | JP | 5348567 B2 | 20-11-2013 |
| | | | JP | 2010541283 A | 24-12-2010 |
| | | | KR | 20100099102 A | 10-09-2010 |
| | | | TW | 200936956 A | 01-09-2009 |
| | | | US | 2009086475 A1 | 02-04-2009 |
| | | | US | 2015077971 A1 | 19-03-2015 |
| | | | WO | 2009045922 A2 | 09-04-2009 |
| WO 2013030727 | A1 | 07-03-2013 | NONE | | |
| US 2013083510 | A1 | 04-04-2013 | NONE | | |
| WO 2010088658 | A1 | 05-08-2010 | JP | 2012517106 A | 26-07-2012 |
| | | | US | 2010195307 A1 | 05-08-2010 |
| | | | WO | 2010088658 A1 | 05-08-2010 |

EPO FORM P0459